(19) Europäisches Patentamt / European Patent Office / Office européen des brevets

(11) **EP 4 122 584 A1**

(12) **EUROPEAN PATENT APPLICATION**

(43) Date of publication:
**25.01.2023 Bulletin 2023/04**

(21) Application number: **22184912.8**

(22) Date of filing: **14.07.2022**

(51) International Patent Classification (IPC):
**B01D 53/94** (2006.01)

(52) Cooperative Patent Classification (CPC):
**B01D 53/9409;** B01D 53/90; B01D 2251/2067;
B01D 2252/60; B01D 2255/1021; B01D 2255/1023;
B01D 2255/1025; B01D 2255/1028;
B01D 2255/20707; B01D 2255/20723;
B01D 2255/2073; B01D 2255/20738;
B01D 2255/20761; B01D 2255/20776;
B01D 2255/20784; (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.07.2021 EP 21187365**

(71) Applicant: **BASF SE**
**67056 Ludwigshafen am Rhein (DE)**

(72) Inventor: **Meise, Markus**
**67056 Ludwigshafen (DE)**

(74) Representative: **BASF IP Association**
**BASF SE**
**GBI-C006**
**67056 Ludwigshafen (DE)**

(54) **REDUCTANT FLUID FOR THE AFTER-TREATMENT OF EXHAUST GAS**

(57) A reductant fluid and a SCR system for the after-treatment of exhaust gas in a diesel engine is provided. The reductant fluid contains urea, water and at least one non-ionic surfactant, wherein a metal content in total of the reductant fluid is < 3.8 ppm, based on the total weight of the reductant fluid. Further, the invention relates to the use of said reductant fluid for after-treatment of an exhaust gas of a diesel engine in a SCR system, wherein the exhaust gas contains nitrogen oxides ($NO_x$) as well as to reduce the content of nitrogen oxides ($NO_x$) in the exhaust gas of a diesel engine in a SCR system.

Fig. 1

EP 4 122 584 A1

**(Cont. next page)**

(52) Cooperative Patent Classification (CPC): (Cont.)
B01D 2255/50

**Description**

The present invention relates to a reductant fluid comprising urea, water and at least one surfactant, wherein a metal content of the reductant fluid is < 3.8 ppm, based on the total weight of the reductant fluid, and to the use thereof for after-treatment of an exhaust gas of a diesel engine in a SCR system and for reducing the content of nitrogen oxides ($NO_x$) in the exhaust gas of a diesel engine in a SCR system. Further, the invention relates to a SCR system comprising a source of the reductant fluid.

Background of the invention

The predominant exhaust after-treatment technique for diesel engines on the market is the Selective Catalytic Reduction (SCR). The SCR technology utilizes ammonia which is capable of reducing nitrogen oxides ($NO_x$) formed in the engine combustion in the presence of a catalyst.

The SCR technology, using ammonia generated by decomposition of urea, is applied in combustion off-gases of large industrial boilers and furnace installations as well as in mobile applications.

For automotive applications, ammonia is typically generated onboard by decomposition of urea. An aqueous composition of urea is usually fed in the exhaust gas upstream of the SCR catalyst and decomposes to gaseous ammonia due to the relatively high exhaust gas temperatures. Typically, the low-temperature cut-off point for urea injection is in the range of from 200 to 250°C, but may also be less, for example, at 180°.

However, this technology is still connected with some deficiencies. It requires evaporation of the aqueous urea composition at the exhaust gas temperature. Evaporative decomposition of urea in concurrent with evaporation of water may be not sufficient. Instead of forming ammonia, urea may be transformed into various undesired by-products, for example, cyanuric acid resulting from incomplete decomposition of urea. Those by-products may be deposited on the wall of the exhaust pipe, thus causing a loss of engine power or may have an adverse effect on the SCR catalyst.

As bends are typically present in the exhaust pipe between the introducing device and the SCR unit, such bends usually act as guard against deposits from urea or urea residues from contacting the catalyst in the SCR unit. Thus, deposits usually occur on the walls of the exhaust pipe close to the injection means.

Further, it has become known for urea to be particularly finely atomized during introducing into the gas stream. In order to enhance atomization, a surfactant may be added. The diameter of the droplets sprayed into the exhaust gas stream should be very small to achieve a high temperature in a short time in the exhaust gas stream, thus leading to a fine distribution and thorough hydrolysis of urea.

WO 2010/044676 A1 discloses a method of minimizing the diameter of droplets of a urea solution added to an exhaust gas stream by adding a mixture of non-ionic surfactants containing a low alkoxylated compound and a high alkoxylated compound.

US 2010/0015022 A1 discloses the use of a urea solution including a multi-functional additive with an HLB of from 7 to 17 for limiting the formation of deposits based on cyanuric acid in a SCR device.

WO 2011/046491 A1 discloses the use of a surfactant, such as $C_3H_7(C_2H_4O)_1OH$, $C_6H_{13}(C_2H_4O)_4OH$, $C_9H_{19}(C_2H_4O)_{10}OH$ or $C_{18}H_{37}(C_2H_4O)_{20}OH$, as an additive to a urea solution for a catalytic converter. Injection of a urea solution including < 0.1% of said additive in a system at 250°C caused hardly white deposits based on products derived from insufficient conversion of urea to ammonia. At a temperature of 350°C, no white deposits were observed.

WO 03/30733 A1 discloses the use of 30 wt% of ethylene glycol in a 30wt% urea solution in order to lower the freezing point of the urea-containing solution. At an exhaust gas temperature of about 204°C similar $NO_x$ reduction is described compared to a urea-containing solution without ethylene glycol.

An aqueous urea solution of high purity according to ISO 22241-1:2019 is commercially available under the trademark AdBlue®. ISO 22241-2:2019 requires a critical value of phosphate and metal content (trace element content), especially for Al, Ca, Cr, Cu, Fe, K, Mg, Na, Ni and Zn. For example, the critical value for each of Ca, Mg and Na is 0.5 ppm, determined by ICP-OES method (inductively coupled plasma-optical emission spectrometry).

Adding a surfactant in a urea-containing composition may introduce metal salts in an undesired amount, for example, as surfactants usually contain residual metal salts due to its manufacturing processes using alkaline catalysts like alkali or alkaline earth salts.

However, the presence of metal salts, like calcium, magnesium, potassium and sodium salts, typically as nitrates or chlorides, in an aqueous urea composition may have an adverse effect in the SCR technology, for example, by clogging the pores of the catalyst or by poisoning active centers of the catalyst in case of, for example, copper salts.

Further, low exhaust gas temperatures, for example, less than about 240°C usually occur in slow driving situations with frequent stops like city busses or construction vehicles. Low exhaust gas temperatures may also be supported by vehicle construction like low-floor busses where sufficient insulation of the exhaust piping is difficult to achieve. These low temperatures may cause higher $NO_x$ emission than at usual operating temperatures, as the operating window of the SCR catalyst is not reached, and the reduction of $NO_x$ is not running efficiently.

Accordingly, there is a still a need for a safe and reliable SCR system, especially at temperatures occurring in low exhaust gas temperature situations as well as a need for an effective answer to comply with the ISO standard associated with SCR for diesel engines, for example, mobile diesel engines.

Therefore, it is an object of the present invention to provide a urea-containing composition which enables a stable and durable equipment of the exhaust after-treatment system, which essentially comply with the criteria of the trace element content according to ISO 22241-1:2019 and/or allows for exhibit less $NO_x$ emissions.

Further, it is an object to eliminate deposits leading to a destruction of the equipment, in particular the catalyst, i.e., to enhance the long-term functionality of the catalyst.

Further, it is an object to provide a urea-containing composition to be used to exhibit less $NO_x$ emissions and/or to increase the lifetime of a SCR catalyst in a diesel engine, especially at low exhaust gas temperatures.

Further, it is an object to provide a process for after-treatment of an exhaust gas of a diesel engine which allows for reducing $NO_x$ emissions in exhaust gases by SCR, while, for example, harmful components for the equipment, especially the SCR catalyst, are to be avoided as far as possible.

Further, it is an object to provide a reliable SCR system for reducing $NO_x$ emissions of a diesel engine, especially operated at low exhaust temperatures.

Summary of the invention

It has now been found that a urea-containing composition may significantly improve $NO_x$ emissions of a diesel exhaust gas in a SCR system, especially within a temperature of $\leq 240°C$. Deposits on the equipment of the exhaust after-treatment in diesel engines may be reduced and thus, the lifetime of the SCR catalyst may be significantly increased.

Accordingly, in a first aspect the invention relates to a reductant fluid comprising urea, water and at least one non-ionic surfactant, wherein a metal content in total of the reductant fluid is < 3.8 ppm, preferably $\leq 3.5$ ppm, based on the total weight of the reductant fluid.

In a further aspect, the invention relates to the use of a reductant fluid, as defined in any aspect herein, for after-treatment of an exhaust gas of a diesel engine in a SCR system, wherein the exhaust gas contains nitrogen oxides $(NO_x)$.

In a further aspect, the invention relates to the use of a reductant fluid, as defined in any one of claims 1 to 11, for reducing the content of nitrogen oxides $(NO_x)$ in the exhaust gas of a diesel engine in a SCR system.

In a further aspect, the invention relates to a SCR system for after-treatment of an exhaust gas of a diesel engine, comprising a source of a reductant fluid, which reductant fluid is as defined in any aspect herein.

Detailed description of the invention

The term "diesel engine", as used herein, means to include all compression-ignition engines, for both mobile (including marine) and stationary power plants.

The term "exhaust gas", as used herein, means the combustion effluent emitted from a diesel engine, wherein the combustion effluent comprises products of the combustion of hydrocarbons, carbon monoxide, sulfur oxides and nitrogen oxides ($NO_2$ and NO).

The term "$NO_x$", as used herein means the mixture of NO and $NO_2$.

The term "motor vehicle", as used herein, includes cars, busses, trucks, tractors, farm vehicles, construction vehicles and the like.

The term "SCR system", as used herein, means a system for catalytic reduction of $NO_x$ in the exhaust gas of a vehicle engine, and using urea as a precursor for ammonia.

The term "ISO 22241-1", as used herein, means the international standard "Diesel engines - NOx reducing agent AUS 32 - Part 1: Quality requirements", second edition 2019-02.

The term "ISO 22241-2", as used herein, means the international standard "Diesel engines - NOx reducing agent AUS 32 - Part 2: Test methods", second edition 2019-02.

The term "metal content in total", as used herein, means the content of all metals present usually as metal ions in a reductant fluid, i.e., the sum of concentrations of each metal / element, determined by ICP-OES (inductively coupled plasma-optical emission spectrometry), preferably according to ISO 22241-2.

The term "HLB", as used herein, means the hydrophilic-lipophilic balance value. The HLB of a surfactant is a measure of the degree to which it is hydrophilic or lipophilic, usually determined by calculated values, as described by Griffin according to formula (III)

$$HLB = 20 \times (1 - M_l / M) \qquad (III),$$

wherein

$M_l$ denotes the molar mass of the lipophilic portion of the molecule, and M denotes the molar mass of the whole molecule.

Alkyl, e.g., $C_6$-$C_{22}$-alkyl, $C_8$-$C_{20}$-alkyl, $C_8$-$C_{18}$-alkyl, may be within the given limits of carbon atoms linear or branched, where possible. Examples are n-hexyl or iso-hexyl, in particular 1-methyl-pent-1-yl or 4-methyl-pent-1-yl; n-heptyl or iso-heptyl, in particular 1-methyl-hex-1-yl, 5-methyl-hex-1-yl or 1-ethyl-pent-1-yl; n-octyl or iso-octyl, in particular 1-methyl-hept-1-yl or 6-methyl-hept-1-yl; n-nonyl or iso-nonyl, in particular 1-methyl-oct-1-yl or 7-methyl-oct-1-yl; n-decyl or iso-decyl, in particular 2-methyl-non-1-yl, 8-methyl-non-1-yl or 2-propyl-hept-1-yl; n-undecyl or iso-undecyl, in particular 2-methyl-dec-1-yl; n-dodecyl or iso-dodecyl, in particular 2-methyl-undec-1-yl, 9-methylundec-1-yl, 4,8-dimethyl-dec-1-yl, 2,6,8-trimethyl-non-1-yl, 2-ethyl-dec-1-yl, 2-ethyl-3-methyl-non-1-yl, 2,4-diethyl-oct-1-yl, 2-butyl-oct-1-yl; n-tridecyl or iso-tridecyl, in particular 2-methyl-dodec-1-yl, 11-methyl-dodec-1-yl, 2,4,8-trimethyl-dec-1-yl, 2,4,6,8-tetramethyl-non-1-yl, 2-ethyl-undec-1-yl, 2,2-diethyl-non-1-yl, 2-propyl-dec-1-yl; n-tetradecyl or iso-tetradecyl, in particular 2-methyl-tridec-1-yl, 2,6,10-trimethyl-undec-1-yl, 2,4,6,8-tetramethyl-dec-1-yl, 2-ethyl-dodec-1-yl, 7-ethyl-2-methyl-undec-1-yl, 2-(2-methylpropyl)-dec-1-yl, 2-butyl-2-ethyl-6-methyl-hept-1-yl, 2-pentyl-non-1-yl, 2-hexyloct-1-yl; n-pentadecyl or iso-pentadecyl, in particular 2-methyl-tetradec-1-yl, 13-methyltetradec-1-yl, 3,7,11-trimethyl-dodec-1-yl, 2-propyl-dodec-1-yl, 3-hexyl-non-1-yl; n-hexadecyl or iso-hexadecyl, in particular 2-methyl-pentadec-1-yl, 14-methyl-pentadec-1-yl, 2,4,8-trimethyl-tridec-1-yl, 4,8,12-trimethyl-tridec-1-yl, 2-ethyl-tetradec-1-yl, 2-butyl-dodec-1-yl, 2-hexyl-decan-1-yl; n-heptadecyl or iso-heptadecyl, in particular 2-methyl-hexadec-1-yl; n-octadecyl or iso-octadecyl, in particular 2-methyl-heptadec-1-yl, 16-methyl-heptadec-1-yl; n-nonadecyl or iso-nonadecyl, in particular 2-methyl-octadec-1-yl or 17-methyl-octadec-1-yl; n-eicosyl or iso-eicosyl, in particular 2-methyl-nonadec-1-yl or 18-methyl-nonadec-1-yl; n-heneicosyl or iso-heneicosyl, in particular 2-methyleicos-1-yl or 19-methyl-eicos-1-yl; n-docosyl or iso-docosyl, in particular 2-methylheneicos-1-yl or 20-methyl-heneicos-1-yl.

Alkenyl, e.g., $C_6$-$C_{22}$-alkenyl, or $C_{10}$-$C_{18}$-alkenyl, is usually within the given limits of carbon atoms linear or branched. Examples are n-dec-9-en-1-yl, n-undec-10-en-1-yl, n-octadecenyl, in particular (E)-octadec-9-en-1yl, (Z)-octadec-9-en-1yl, (9Z,12E)-octadeca-9,12-dien-1yl, (Z,Z,Z)-octadeca-9,12,15-trien-1-yl, or iso-octadecenyl.

The prefix n- means a linear aliphatic residue with no aliphatic substituents at the sole carbon atom chain in the molecule.

The prefix iso- means a branched aliphatic residue with one or more aliphatic substituents at the carbon atom chain in the molecule, which carbon atom chain attaches to the OH-group and if this condition is fulfilled, possesses the most carbon atoms as a chain.

The term "consisting essentially of", as used with respect to the composition of the reductant fluid, means that additives may be present in the range of 0 to 5 wt%, based on the total weight of the reductant fluid, preferably 0 to 3 wt%, more preferably 0 to 2 wt%, especially 0 to 0.8 wt%.

As used herein, the singular forms of the articles "a", "an" and "the" include plural forms unless the content clearly dictates otherwise.

Figure 1 is a diagram showing the $NO_x$ emission at 200°C at different dosage in g/h of the urea-containing solutions.

Figure 2 is a diagram showing the $NH_3$ slip in ppm at 200°C at increasing dosage in g/h of the urea-containing solutions.

The metal content in total present in the reductant fluid of the invention should be as low as possible. If present, the metals may be any metal selected from the groups I, II, III, VIa, VIIIa, Ia or Ib of the periodic system. Mixtures of two, three or more metals may also be present.

The metal content in total of the reductant fluid is preferably $\leq$ 3.5 ppm, based on the total weight of the reductant fluid, more preferably $\leq$ 3.0 ppm, most preferably $\leq$ 2.5 ppm.

Further, the metal content of each individual metal should be as low as possible. Preferably, the content of each metal complies with the trace element content according to ISO 22241-2.

The metal content may be determined by ICP-OES, preferably according to ISO 22241-2, corresponding to the element concentration mentioned therein.

Accordingly, in a preferred aspect, the invention relates to a reductant fluid comprising urea, water and at least one non-ionic surfactant, wherein the metal content in total of the reductant fluid is < 3.8 ppm, based on the total weight of the reductant fluid, determined by ICP-OES, especially according to ISO 22241-2.

Metals like Al, Ca, Cr, Cu, Fe, K, Mg, Na, Ni or Zn may be present. Mixtures of two, three or more metals may also be present.

Accordingly, in a preferred aspect, the invention relates to a reductant fluid comprising urea, water and at least one non-ionic surfactant, wherein the metal is selected from the group consisting of Al, Ca, Cr, Cu, Fe, K, Mg, Na, Ni, Zn and a mixture of two or more thereof.

Preferably, the metal content of each metal in the reductant fluid is < 0.5 ppm, based on the total weight of the reductant fluid, preferably $\leq$ 0.45 ppm.

The presence of metals in form of their salts like calcium or sodium salts may lead to clogging pores of the catalyst or to forming deposits on other parts of the exhaust pipe. The presence of transition metal salts like copper or nickel salts may additionally poison catalytically active centers of the catalyst.

Accordingly, in a preferred aspect, the invention relates to a reductant fluid comprising urea, water and at least one non-ionic surfactant, wherein the metal content of each metal, selected from the group consisting of Al, Ca, K, Mg and Na, is $\leq 0.45$ ppm, based on the total weight of the reductant fluid, preferably $\leq 0.4$ ppm, more preferably $\leq 0.35$ ppm, most preferably $\leq 0.3$ ppm.

In a further preferred aspect, the invention relates to a reductant fluid comprising urea, water and at least one non-ionic surfactant, wherein the metal content of each metal, selected from the group consisting of Cr, Cu, Fe and Zn, is $\leq 0.18$ ppm, based on the total weight of the reductant fluid, preferably $\leq 0.15$ ppm, more preferably $\leq 0.12$ ppm, most preferably $\leq 0.1$ ppm.

Additionally, it is desired that the content of phosphate is also as low as possible. Typically, the content of phosphate in the reductant fluid is 0.5 ppm, preferably < 0.4 ppm, more preferably $\leq 0.3$ ppm.

For example, in order to enhance atomization of a urea-containing composition when contacting the exhaust gas, for example, to reduce its droplets and to better disperse the composition, at least one non-ionic surfactant is comprised in the reductant fluid. Non-ionic surfactants are amphiphilic compounds, the lipophilic part of which does not dissociate into ions and hence has no charge. The non-ionic surfactant may be, for example, fatty alcohol or alkyl phenol alkoxylates, alkoxylated fatty acid esters or alkoxylated fatty amines.

The surfactant is preferably a non-ionic surfactant having an HLB of from 8 to 16. More preferably, the non-ionic surfactant has an HLB value of from 9 to 15, especially from 10 to 14.

The non-ionic surfactant is usually water-soluble or water-dispersible, preferably water-soluble.

The non-ionic surfactant is usually a low foaming surfactant in an aqueous environment, e.g., a dispersion or a solution.

Accordingly, in a preferred aspect, the invention relates to a reductant fluid comprising urea, water and at least one non-ionic surfactant, wherein the non-ionic surfactant has an HLB value of from 8 to 16.

Preferably, the non-ionic surfactant is a polyalkoxylated alcohol.

Accordingly, in a preferred aspect, the invention relates to a reductant fluid comprising urea, water and at least one non-ionic surfactant, wherein the non-ionic surfactant is a polyalkoxylated alcohol, preferably each of which has an HLB value of 8 to 16.

Suitable non-ionic surfactants include the reaction products of aliphatic alcohols with from 3 to 30 moles of alkylene oxide. The alkyl chain of the aliphatic alcohol can either be linear or branched and contains 6 to 22 carbon atoms. The alkenyl chain of the aliphatic alcohol is usually linear or branched and contains 6 to 22 carbon atoms.

A suitable non-ionic surfactant is a polyalkoxylated alcohol of formula

$$R^1O - (EO)_x - H \qquad (I),$$

wherein

$R^1$ is unsubstituted, linear or branched $C_6$-$C_{22}$-alkyl or $C_6$-$C_{22}$-alkenyl,
$x$ is a real number in the range of $\geq 3$ to $\leq 30$, and
$EO$ is $CH_2$-$CH_2$-O.

A further suitable non-ionic surfactant is a polyalkoxylated alcohol of formula

$$R^2\text{-}O\text{-}(EO)_y\text{-}(PO)_z\text{-}H \qquad (II),$$

wherein

$R^2$ is unsubstituted, linear or branched $C_6$-$C_{22}$-alkyl or $C_6$-$C_{22}$-alkenyl,
$y$ is a real number in the range of $\geq 2$ to $\leq 20$,
$z$ is a real number in the range of $\geq 1$ to $\leq 10$,
$EO$ is $CH_2$-$CH_2$-O-, and
$PO$ is $CHCH_3$)-$CH_2$-O- or $CH_2$-$CH(CH_3)$-O-,

whereby the concatenations of y and z are distributed to form a random polymeric structure.

Accordingly, in a preferred aspect, the invention relates to a reductant fluid comprising urea, water and at least one non-ionic surfactant, wherein the non-ionic surfactant is

(i) a polyalkoxylated alcohol of formula

$$R^1O - (EO)_x-H \qquad (I),$$

wherein

$R^1$ is unsubstituted, linear or branched $C_6$-$C_{22}$-alkyl or $C_6$-$C_{22}$-alkenyl, especially $C_6$-$C_{22}$-alkyl,

x is a real number in the range of $\geq 3$ to $\leq 30$, and

EO is $CH_2$-$CH_2$-O;

Or

(ii) a polyalkoxylated alcohol of formula

$$R^2\text{-}O - (EO)_y\text{-} (PO)_2\text{-}H \qquad (II),$$

wherein

$R^2$ is unsubstituted, linear or branched $C_6$-$C_{22}$-alkyl or $C_6$-$C_{22}$-alkenyl, especially $C_6$-$C_{22}$-alkyl,

y is a real number in the range of $\geq 2$ to $\leq 20$,

z is a real number in the range of $\geq 1$ to $\leq 10$,

EO is $CH_2$-$CH_2$-O-,

PO is $CH(CH_3)$-$CH_2$-O- or $CH_2$-$CH(CH_3)$-O-,

whereby the concatenations of y and z are distributed to form a random polymeric structure.

$C_6$-$C_{22}$-alkenyl is preferably $C_8$-$C_{20}$-alkenyl, more preferably $C_8$-$C_{18}$-alkenyl, most preferably $C_{10}$-$C_{18}$-alkenyl, for example, $C_{10}$-alkenyl or $C_{18}$-alkenyl.

Further preferred is a reductant fluid comprising urea, water and at least one non-ionic surfactant, wherein the non-ionic surfactant is

(i) a polyalkoxylated alcohol of formula

$$R^1O - (EO)_x-H \qquad (I),$$

wherein

$R^1$ is unsubstituted, linear or branched $C_6$-$C_{22}$-alkyl,

x is a real number in the range of $\geq 3$ to $\leq 30$, and

EO is $CH_2$-$CH_2$-O;

Or

(ii) a polyalkoxylated alcohol of formula

$$R^2\text{-}O - (EO)_y\text{-} (PO)_z\text{-}H \qquad (II),$$

wherein

$R^2$ is unsubstituted, linear or branched $C_6$-$C_{22}$-alkyl,

y is a real number in the range of $\geq 2$ to $\leq 20$,

z is a real number in the range of $\geq 1$ to $\leq 10$,

EO is $CH_2$-$CH_2$-O-,

PO is $CH(CH_3)$-$CH_2$-O- or $CH_2$-$CH(CH_3)$-O-,

whereby the concatenations of y and z are distributed to form a random polymeric structure.

The above formulae are a general definition of the polyalkoxylated alcohols. These substances are mixtures of substances of the type indicated having different chain lengths. For the indices, therefore, average values are calculated which may differ from an integer. Hence, the indices have been kept as real numbers, which takes into account such possibilities.

By the term "random polymeric structure", the polyalkoxylated alcohol of formula (II) takes into consideration the random arrangement of EO and PO units as well. For example, the polyalkoxylated alcohols of formula (II) may encompass $R^2O$ - $(EO)_y$ -$(PO)_z$ - H as well as $R^2O$ - $(PO)_z$ - $(EO)_y$ - H.

The random polymeric structure may also include one PO unit directly bound to the alkyl or alkenyl group and further two or more EO units.

It is understood herein that $R^1$-OH and $R^2$-OH are mono-alcohols.

Preferably, $R^1$-OH and $R^2$-OH are primary alcohols or secondary alcohols. More preferably, $R^1$-OH and $R^2$-OH are primary alcohols in case $R^1$ and $R^2$ are branched, and $R^1$-OH and $R^2$-OH are primary alcohols or secondary alcohols in case $R^1$ and $R^2$ are linear. Most preferably, $R^1$ and $R^2$ are primary alcohols.

The alkoxylation of the alcohols $R^1$-OH or $R^2$-OH can be conducted by well-known procedures at suitable temperature and pressure. The respective alcohol is reacted with ethylene oxide in case of $R^1$-OH, and with ethylene oxide and propylene oxide in case of $R^2$-OH in the presence of a suitable catalyst, for example a conventional alkaline catalyst. In case ethylene oxide and propylene oxide are used, the alkoxides may be added randomly. The alkaline catalyst may be alkali hydroxides or alkaline earth hydroxides, for example, NaOH, KOH or $Ca(OH)_2$. The reaction mixture is then neutralized with, for example, acetic acid, followed by treating with water to wash off the salts generated during neutralization.

The alcohols may be naturally derived or synthetic (petrochemically derived), for example oxo-alcohols or Guerbet alcohols.

Synthetic alcohols may be prepared from petrochemical feedstock by a method known in the art, for example by the oxo process, modified oxo process, Ziegler process, Bashkirov oxidation, Guerbet reaction or other similar processes.

Naturally derived alcohols may be obtainable from a natural source, for example from a fat or an oil of plant or animal origin, by hydrogenation.

The polyalkoxylated alcohols are not end-capped.

Preferably, the non-ionic surfactant is a polyalkoxylated alcohol of formula (I), which is obtainable by ethoxylation of $R^1$-OH with x equivalents of ethylene oxide based on one equivalent $R^1$-OH, wherein

R1     is unsubstituted, linear or branched C6-C22-alkyl,
x       is a real number in the range of from $\geq 3$ to $\leq 30$; and
EO     is $CH_2$-$CH_2$-O.

Further preferred is a polyalkoxylated alcohol of formula (II), which is obtainable by alkoxylation of $R^2$-OH with y equivalents of ethylene oxide and z equivalents of propylene oxide, based on one equivalent $R^2$-OH, wherein

R2     is unsubstituted, linear or branched C6-C22-alkyl,
y       is a real number in the range of $\geq 2$ to $\leq 20$,
z       is a real number in the range of $\geq 1$ to $\leq 10$,
EO     is $CH_2$-$CH_2$-O-,

PO is $CH(CH_3)$-$CH_2$-O- or $CH_2$-$CH(CH_3)$-O-, and
whereby the concatenations of y and z are distributed to form a random polymeric structure.

Accordingly, in a preferred aspect, the invention relates to a reductant fluid comprising urea, water and at least one non-ionic surfactant, wherein the non-ionic surfactant is

(i) a polyalkoxylated alcohol of formula

$$R^1O \text{ - } (EO)_x \text{ - H} \qquad \text{(I),}$$

which is obtainable by an ethoxylation of $R^1$-OH with x equivalents of ethylene oxide based on one equivalent $R^1$-OH, wherein

$R^1$     is unsubstituted, linear or branched $C_6$-$C_{22}$-alkyl, and
x       is a real number in the range of from $\geq 3$ to $\leq 30$;
EO     is $CH_2$-$CH_2$-O;

or
(ii) a polyalkoxylated alcohol of formula

$$R^2\text{- O - }(EO)_y\text{- }(PO)_z\text{ - H} \qquad (II),$$

which is obtainable by alkoxylation of $R^2$-OH with y equivalents of ethylene oxide and z equivalents of propylene oxide, based on one equivalent $R^2$-OH, wherein

$R^2$ is unsubstituted, linear or branched $C_6$-$C_{22}$-alkyl,
y is a real number in the range of $\geq 2$ to $\leq 20$,
z is a real number in the range of $\geq 1$ to $\leq 10$,
EO is $CH_2$-$CH_2$-O-,
PO is $CH(CH_3)$-$CH_2$-O- or $CH_2$-$CH(CH_3)$-O-, and

whereby the concatenations of y and z are distributed to form a random polymeric structure.

In a preferred embodiment, $R^1$ is unsubstituted, linear or branched $C_8$-$C_{20}$-alkyl. More preferably, $R^1$ is unsubstituted, linear $C_8$-$C_{20}$-alkyl or unsubstituted, branched $C_{10}$-$C_{15}$-alkyl.

In a preferred embodiment, x is in the range of $\geq 3$ to $\leq 15$, more preferably $\geq 5$ to $\leq 15$ or $> 5$ to $\leq 15$, especially $> 5$ to $\leq 15$.

A polyalkoxylated alcohol is preferably of formula (I), wherein

$R^1$ is linear or branched $C_8$-$C_{20}$-alkyl, and
x is a real number in the range of $\geq 3$ to $\leq 18$, preferably $\geq 5$ to $\leq 15$.

A polyalkoxylated alcohol is preferably of formula (I), wherein

$R^1$ is linear or branched $C_8$-$C_{18}$-alkyl or unsubstituted, branched $C_{10}$-$C_{15}$-alkyl, and
x is a real number in the range of $\geq 3$ to $\leq 18$, preferably $\geq 5$ to $\leq 15$.

Accordingly, in a preferred aspect, the invention relates to a reductant fluid comprising urea, water and at least one non-ionic surfactant, wherein the non-ionic surfactant is (i) a polyalkoxylated alcohol of formula

$$R^1O\text{ - }(EO)_x\text{ - H} \qquad (I),$$

which is obtainable by ethoxylation of $R^1$-OH with x equivalents of ethylene oxide based on one equivalent $R^1$-OH wherein

$R^1$ is unsubstituted, linear or branched $C_8$-$C_{18}$-alkyl or unsubstituted, branched $C_{10}$-$C_{15}$-alkyl,
x is a real number in the range of $\geq 3$ to $\leq 18$, preferably $\geq 5$ to $\leq 15$,
EO is $CH_2$-$CH_2$-O and

the non-ionic surfactant has preferably an HLB of from 8 to 16, especially from 9 to 15, in particular from 10 to 14.

In a further preferred aspect, the invention relates to a reductant fluid comprising urea, water and at least one non-ionic surfactant, wherein the at least one non-ionic surfactant is a polyalkoxylated alcohol of formula (I), wherein

$R^1$ is unsubstituted, linear or branched $C_8$-$C_{18}$-alkyl,
x is a real number in the range of $\geq 5$ to $\leq 20$, and
the non-ionic surfactant has preferably an HLB of from 8 to 16, especially from 9 to 15, in particular from 10 to 14.

In particular, $R^1$ may be $C_{12/14}$ alkyl, $C_{16}$-$C_{18}$-alkyl, $C_{13/15}$-alkyl (derived from $C_{13/15}$ oxo alcohol), $C_{13}$-alkyl (derived from $C_{13}$ oxo-alcohol) or $C_{10}$-alkyl (derived from $C_{10}$ Guerbet alcohol).

Especially, $R^1$ is linear $C_8$-$C_{20}$-alkyl, in particular linear $C_8$-$C_{18}$-alkyl, and x is a real number in the range of $\geq 5$ to $\leq 15$.

In a preferred embodiment, $R^2$ is unsubstituted, linear or branched $C_8$-$C_{20}$-alkyl. More preferably, $R^1$ is unsubstituted, linear $C_8$-$C_{20}$-alkyl or unsubstituted, branched $C_{10}$-$C_{15}$-alkyl.

In a preferred embodiment, y is in the range of $\geq 3$ to $\leq 12$, more preferably $\geq 5$ to $\leq 10$ or $> 5$ to $\leq 10$, especially $> 5$ to $\leq 10$.

In a preferred embodiment, z is in the range of $\geq 1$ to $\leq 8$, more preferably $\geq 1$ to $\leq 5$.

A polyalkoxylated alcohol is preferably of formula (II), wherein

R[2]    is unsubstituted, linear or branched $C_8$-$C_{20}$-alkyl, preferably $C_8$-$C_{18}$-alkyl,

y    is a real number in the range of $\geq 3$ to $\leq 12$, and

z    is a real number in the range of $\geq 1$ to $\leq 8$,

whereby the concatenations of y and z are distributed to form a random polymeric structure.

A polyalkoxylated alcohol is preferably of formula (II), wherein

R[2]    is unsubstituted, linear or branched $C_8$-$C_{18}$-alkyl,

y    is a real number in the range of $\geq 5$ to $\leq 10$, and

z    is a real number in the range of $\geq 1$ to $\leq 5$,

whereby the concatenations of y and z are distributed to form a random polymeric structure.

In particular, R[2] may be C12/14 alkyl, $C_{16}$-$C_{18}$-alkyl, $C_{13/15}$-alkyl (derived from C13/15 oxo alcohol), $C_{13}$-alkyl (derived from $C_{13}$ oxo-alcohol) or $C_{10}$-alkyl (derived from $C_{10}$ Guerbet alcohol).

The non-ionic surfactant may also be a mixture of two or more non-ionic surfactants.

Non-ionic surfactants may include a various amount of metal salts, resulting from the preparation process. The non-ionic surfactant is generally purified by suitable methods known in the art in order to reduce the metal salts generated during neutralization, for example, by treating with phosphoric acid or silicates and separating the formed salts, e.g., by filtration.

The non-ionic surfactant is usually used herein in a technically pure quality. Typically, the metal content (in form of metal ions or salts, resp.) of the non-ionic surfactant is $\leq 100$ ppm, especially $\leq 50$ ppm, determined by ICP-OES, preferably according to ISO 22241-2.

Surfactants are commercially available from, for example, BASF, Sasol or Shell Chemicals.

The reductant fluid comprises urea, water and at least one non-ionic surfactant.

Generally, urea may be present in the range of from 20 to 45 wt%, based on the total weight of the reactive fluid, preferably from 22 to 40 wt%, more preferably from 30 to 35 wt%, most preferably 31 to 34 wt% or 31.8 to 33.2 wt%. A preferred concentration for mobile uses is about 32.5 wt%.

Preferably, urea is used in a technically pure form, which may include traces of biuret, ammonia and water.

Water is usually the major part of the composition. Typically, water is present in an amount of from about 80 to 55 wt%, based on the total weight of the reactive fluid composition, preferably 60 to 78 wt%. The water used in the reaction fluid is generally distilled or deionized water, especially with a conductivity less than 0.5 mS/m according to ISO 3696 grade 3. The water is usually purified by single distillation, deionization, ultra-filtration or reverse-osmosis.

The at least one non-ionic surfactant is generally present in the range of from 0,01 to 5 wt%, based on the total weight of the reductant fluid, preferably from 0.05 to 3 wt%, more preferably from 0.05 to 2.5 wt%.

Accordingly, in a preferred aspect, the invention relates to a reductant fluid comprising urea, water and at least one non-ionic surfactant, wherein the reductant fluid comprises 20 to 45 wt% of urea, 55 to 80 wt% of water and 0.01 to 5 wt% of the non-ionic surfactant.

In a further preferred aspect, the invention relates to a reductant fluid comprising urea, water and at least one non-ionic surfactant, wherein the reductant fluid comprises 22 to 40 wt% of urea, 60 to 78 wt% of water and 0.05 to 3 wt% of the non-ionic surfactant.

Further preferred is a reductant fluid, wherein the reductant fluid comprises 30 to 35 wt% of urea, 65 to 70 wt% of water and 0.05 to 2.5 wt% of the non-ionic surfactant.

The reductant fluid may contain one or more additives other than the non-ionic surfactant. Examples of additives are a co-solvent, for example for promoting the dissolution of the non-ionic surfactant, an anti-freezing agent, an agent to maintain injectors free of deposits, an anti-foaming agent, a tracer material or the like, which are generally miscible with the reductant fluid.

Suitable anti-freezing agents, also optionally functioning as co-solvent, include alcohols, like monohydric or polyhydric alcohols, that are miscible with water. Examples of suitable polyhydric alcohols include ethylene glycol, propylene glycol, glycerol and polyethylene glycol. Examples of suitable monohydric alcohols include methanol, ethanol, propanol and isopropanol.

A tracer material may be added to the reductant fluid for authentication, for example to create product specific codes and trace for origin. Typically, the tracer material is an organic substance, for example a fluorescent substance.

A tracer material is only added in ppb levels, for example, in an amount of from 10 to 100 ppb, based on the total weight of the reductant fluid.

The additives also include the optional components of the non-ionic surfactant, optionally resulting from the preparation process of the non-ionic surfactant, for example, ethylene glycol, polyethylene glycol, propylene glycol, polypropylene glycol or alcohols R[1]-OH or R[2]-OH.

The amount of the additives may be in the range of up to 5 wt% (0 to 5 wt%), based on the total weight of the reductant fluid. Preferably, the amount of said other additives may be in the range of from 0 to 3 wt% or up to 3 wt%, for example 0.01 to 3 wt%, more preferably up to 2 wt%, for example 0.01 to 2 wt%, or up to 1 wt% or 0.8 wt%.

Thus, the reductant fluid essentially consists of urea, water and at least one non-ionic surfactant, wherein the metal content of the reductant fluid is < 3.8 ppm, preferably ≤ 3.5 ppm, based on the total weight of the reductant fluid.

Preferably, reductant fluid essentially consists of urea, water and at least one non-ionic surfactant, wherein the metal content of the reductant fluid is < 3.8 ppm, based on the total weight of the reductant fluid, and the amount of additives is ≤ 3 wt%, based on the total weight of the reductant fluid, especially 0 to 2 wt%, in particular 0 to 0.8 wt%.

The reductant fluid will be prepared in its final form as a liquid. The reductant fluid is prepared in usual manner by mixing its components, typically within a temperature range of from 10 to 60°C for 5 to 20 hours. Generally, the at least one surfactant is added to a solution of urea and stirred at room temperature (20-25°C) for 10 to 15 hours. The optional additives are usually added together with the surfactant.

The aqueous solution of urea may be prepared by dilution of virgin urea synthesis, dilution of concentrated urea solutions or dissolution of solid urea.

Preferably, the aqueous solution of urea is made by diluting of urea from urea synthesis. Urea is usually prepared in a closed system by reacting ammonia and carbon dioxide at elevated temperature and pressure, for example at about 170 to 225°C and at about 220 to 260 bar to form a water-containing urea melt, followed by cooling, for example to a temperature of about 10 to 60°C, and dilution with water to the desired concentration. Generally, ammonia is used in excess. The molar ratio of ammonia to carbon dioxide is usually about 3.5:1 to about 5:1.

Accordingly, in a preferred aspect, the invention relates to a process of preparing a reductant fluid comprising urea, water and at least one non-ionic surfactant, wherein a metal content in total of the reductant fluid is < 3.8 ppm, based on the total weight of the reductant fluid, which process comprises adding the at least one non-ionic surfactant to a solution of urea in water and mixing the resultant at a temperature of from 10 to 60°C for 5 to 20 hours.

Preferably, the invention relates to a reductant fluid comprising urea, water and at least one non-ionic surfactant, wherein a metal content in total of the reductant fluid is < 3.8 ppm, preferably ≤ 3.5 ppm, based on the total weight of the reductant fluid, wherein the reductant fluid is obtainable by adding the at least one non-ionic surfactant to a solution of urea in water and mixing the resultant at a temperature of from 10 to 60°C for 5 to 20 hours, and the solution of urea in water is obtainable by reacting ammonia and carbon dioxide in a closed system at a temperature of from 170 to 225°C and at a pressure of from 220 to 260 bar, especially in a molar ratio of ammonia to carbon dioxide of from 3.5:1 to 5:1, and diluting with water.

Using a closed system in preparation of urea usually results in an aqueous urea solution having only contaminants in traces.

The term "closed system", as used herein, means a sealed or otherwise contained system which does not permit a reaction of ammonia and carbon dioxide with its environment.

Typically, the denitrification technique *via* a SCR converter proceeds as follows: a diesel engine produces exhaust gases containing nitrogen oxides ($NO_x$) which is passed through an exhaust pipe connecting the engine to the selective catalytic reduction (SCR) converter. The reductant fluid is usually fed from a source, for example a storage tank, to the exhaust pipe by an injection means and is combined with the exhaust gas upstream to the SCR converter. A suitable injection means may be an injector or a spray device.

Elevated temperature is required in the exhaust pipe to promote both the decomposition of urea to ammonia and the reaction of ammonia with $NO_x$ in the presence of the SCR catalyst. Effluent entering the exhaust pipe may be in the range of from ambient temperature to about 540°C. Usually, the exhaust gas temperature is in the range of from 250 to 450°C

Typically, the exhaust pipe contains one or more catalysts, which are known in the art to hydrolyze urea or SCR reactions such as transition metals or metal oxides. For example, SCR catalysts include metal oxides, transition metal oxides, or transition metals. Examples are vanadium oxide, tungsten oxide, titanium oxide, iron oxide, manganese oxide, chromium oxide, copper oxide, zeolites, platinum, palladium, rhodium, and iridium. Catalyst materials are preferably mounted on supports composed of ceramics or zeolites.

The invention may be applied to diesel engines for stationary or mobile applications, preferably for mobile applications.

Typically, in slow or "stop and go" driving situations, like city busses or construction vehicles, temperatures of 240°C or less are dominant, preferably of from 180 to 230°C.

The instant reductant fluid may be advantageously used for the after-treatment of an exhaust gas of a diesel engine in a SCR system, wherein the exhaust gas contains nitrogen oxides ($NO_x$).

Using the instant reductant fluid, the dosage rate of the reductant fluid may be lowered, preferably compared to the use of a reductant fluid having a metal content of ≥ 3.8 ppm.

Using the instant reductant fluid, the reduction of the content of nitrogen oxides ($NO_x$) in an exhaust gas of a diesel engine in a SCR system may be improved, preferably compared to the use of a reductant fluid having a metal content of ≥ 3.8 ppm.

Preferably, the temperature of the exhaust gas is $\leq 240°C$, preferably $\leq 230°C$, more preferably in a temperature range of from 180 to 230°C.

Accordingly, in a further aspect, the invention relates to the use of a reductant fluid, as defined in any aspect herein, for an after-treatment of an exhaust gas of a diesel engine in a SCR system, wherein the exhaust gas contains nitrogen oxides ($NO_x$), and the temperature of the exhaust gas is preferably $\leq 240°C$, more preferably $\leq 230°C$.

In a further preferred aspect, the invention relates to the use of a reductant fluid, as defined in any aspect herein, for an after-treatment of an exhaust gas of a diesel engine in a SCR system, wherein the exhaust gas contains nitrogen oxides ($NO_x$), and the temperature of the exhaust gas is preferably $\leq 240°C$, more preferably $\leq 230°C$, and the content of nitrogen oxides ($NO_x$) in an exhaust gas of a diesel engine in a SCR system is reduced.

In a further preferred aspect, the invention relates to the use of a reductant fluid, as defined in any aspect herein, for an after-treatment of an exhaust gas of a diesel engine in a SCR system, wherein the exhaust gas contains nitrogen oxides ($NO_x$), and the temperature of the exhaust gas is preferably $\leq 240°C$, more preferably $\leq 230°C$, and the content of nitrogen oxides ($NO_x$) in an exhaust gas of a diesel engine in a SCR system is reduced and/or the dosage rate of the reductant fluid is lowered.

The instant reductant fluid may be advantageously used in a process for the after-treatment of an exhaust gas of a diesel engine in a SCR system, wherein the exhaust gas contains nitrogen oxides ($NO_x$). The reductant fluid is usually stored in a storage tank and fed from there typically *via* a feeding line and injection means to the exhaust gas. The dosage rate of the reductant fluid may be suitably lowered in the instant process.

Preferred is a process for an after-treatment of an exhaust gas of a diesel engine in a SCR system, which process comprises feeding a reductant fluid, as defined in any aspect herein, to the exhaust gas containing nitrogen oxides ($NO_x$), and the temperature of the exhaust gas is $\leq 240°C$, more preferably $\leq 230°C$.

More preferred is a process for an after-treatment of an exhaust gas of a diesel engine in a SCR system, which process comprises feeding a reductant fluid, as defined in any aspect herein, to the exhaust gas containing nitrogen oxides ($NO_x$), the temperature of the exhaust gas is $\leq 240°C$, more preferably $\leq 230°C$, and the dosage rate of the reductant fluid is lowered.

Preferably, the term "lowered dosage rate of a reductant fluid, as defined herein," or "lowering the dosage rate of the reductant fluid, as defined herein," means that the dosage rate is lower, if compared to the dosage rate of a reductant fluid having a metal content of 3.8 ppm or higher.

In a further aspect, the invention relates to a process for reducing the content of nitrogen oxides ($NO_x$) in an exhaust gas of a diesel engine in a SCR system, which process comprises feeding a reductant fluid, as defined in any aspect herein, to the exhaust gas containing nitrogen oxides ($NO_x$).

Preferred is a process for reducing the content of nitrogen oxides ($NO_x$) in an exhaust gas of a diesel engine in a SCR system, which process comprises feeding a reductant fluid, as defined in any aspect herein, to the exhaust gas containing nitrogen oxides ($NO_x$), and the temperature of the exhaust gas is $\leq 240°C$, more preferably $\leq 230°C$.

In a further aspect, the invention relates to the use of a reductant fluid, as defined in any aspect herein, for reducing the content of nitrogen oxides ($NO_x$) in an exhaust gas of a diesel engine in a SCR system, wherein the reductant fluid is preferably fed to the exhaust gas containing nitrogen oxides ($NO_x$).

Especially, the reductant fluid, as defined in any aspect herein, is used for reducing the content of nitrogen oxides ($NO_x$) in an exhaust gas of a diesel engine in a SCR system, wherein the reductant fluid is fed to the exhaust gas containing nitrogen oxides ($NO_x$), and the temperature of the exhaust gas is $\leq 240°C$, more preferably $\leq 230°C$.

Preferably, the term "reducing the content of nitrogen oxides ($NO_x$)" or "improving the reduction of the content of nitrogen oxides ($NO_x$)" means that the content of the nitrogen oxides ($NO_x$) is lower, if compared to a reductant fluid having a metal content of 3.8 ppm or higher.

Further, the invention relates to the use of a reductant fluid, as defined in any aspect herein, for lowering the ammonia emission of a nitrogen oxides ($NO_x$)-containing exhaust gas of a diesel engine in a SCR system.

Especially, the reductant fluid, as defined in any aspect herein, is used for lowering the ammonia emission of a nitrogen oxides ($NO_x$)-containing exhaust gas of a diesel engine in a SCR system, wherein the reductant fluid is fed to the exhaust gas containing nitrogen oxides ($NO_x$), and the temperature of the exhaust gas is $\leq 240°C$, more preferably $\leq 230°C$.

Preferably, the term "lowering the ammonia emission" means that the ammonia emission is lower, if compared to a reductant fluid having a metal content of 3.8 ppm or higher and at the same dosage rate.

In a further aspect, the invention relates to a SCR system for after-treatment of an exhaust gas of a diesel engine, comprising a source of a reductant fluid, wherein the exhaust gas contains nitrogen oxides ($NO_x$), and the reductant fluid is as defined in any aspect defined herein, which is preferably operated at a temperature of the exhaust gas of $\leq 240°C$, more preferably $\leq 230°C$.

A reductant fluid is provided which is characterized by a very low metal content to generally comply with the conditions regarding the trace element content according to ISO 22241-1:2019.

Especially, a reductant fluid is found which may significantly reduce the $NO_x$ emission of an exhaust gas of a diesel engine in a SCR system, especially at operating temperatures usually used in slow driving situations. Thus, the dosage rate may be lowered to provide the same ammonia slip compared to a urea-containing composition without a surfactant. Furthermore, a low metal content of the reductant fluid in combination with a non-ionic surfactant improves the performance even more. And the lower the ammonia slip the better the environmental requirements are met.

The limit of $NO_x$ emission to be typically achieved in a SCR device should be not higher than 80 ppm. Said limit may only be reached at a higher dosage, for example at a dosage rate of $\geq$ 160 g/h, as measured in the setup used in the Example. This dosage may vary in real life application as the setup of the engine, exhaust system or the usage of LNT (Lean $NO_x$ Trap) may influence the needed dosage rates.

Further, the instant reductant fluid allows for essentially eliminating deposits, derived from any metal-containing contaminants, on the SCR catalyst, whereby the long-term functionality of the catalyst may be enhanced. Only a small amount of the non-ionic surfactant is needed, i.e., any deposits based on decomposed surfactant may be avoided.

Due to good wettability and suitable surface tension the instant reductant fluid also vaporizes easily and decomposes to gaseous ammonia before any deposits may occur in exhaust pipes like walls prior to the inlet to the SCR unit, for example, deposits possibly derived from urea.

In particular, the non-ionic surfactants, as used herein, are usually harmless to the catalyst and evaporate or be burned to gaseous compounds harmless to the catalyst. Further, they have no adverse impact on the environment and do not decompose into components that might damage the environment.

Factors specific to mobile diesel engines in the design of an exhaust after-treatment system may also be achieved. In particularly, the instant reductant fluid may be readily stored, pumped and discharged on a moving vehicle.

The definitions and preferences given for the pigment mentioned herein-before apply in any combination as well as in any combination for the other aspects of the invention. The present invention will now be explained in more detail with reference to the following examples. These examples should not be construed as limited. Unless otherwise stated, "%" is always % by weight (wt%).

Examples

Surfactant: non-ionic, reaction product of $C_{12}/C_{14}$ fatty alcohol and 7 mole ethylene oxide of; HLB $\approx$ 12

Example 1:

The surfactant was added to a urea solution (32.5 wt% in deionized water) and stirred overnight at room temperature. A homogenized solution was obtained.

The composition is listed in Tables 1 and 2.

Comparative Examples 1 and 2:
The compositions of the surfactant-free reductant fluids are listed in Tables 1 and 2.

Comparative Example 3:

The surfactant was added to a urea solution (32.5 wt% in water) and stirred overnight at room temperature. A homogenized solution was obtained. The composition is listed in Tables 1 and 2.

The metal content was determined by ICP-OES according to ISO 22241-2:2019, corresponding to the element concentration mentioned therein.

ICP-OES: Varian 720 or Agilent 5110

Using standard solutions (commercially available from Merck KGAA)

Taking into account the measuring system capability and accuracy of the calibration solution the accuracy of measurement is $\geq$ 0.05 ppm, i.e., this value is the lowest value which may be accurately determined.

Table 1

| | Urea content [wt%] | Metal content [ppm] | Surfactant [wt%] |
|---|---|---|---|
| Comp. Ex. 1 | 32.5 | 0.62 | - |
| Ex. 1 | 32.5 | 0.62 | 0.16 |

(continued)

|  | Urea content [wt%] | Metal content [ppm] | Surfactant [wt%] |
|---|---|---|---|
| Comp. Ex. 2 | 32.5 | 3.8 | - |
| Comp. Ex. 3 | 32.5 | 3.8 | 0.16 |

Table 2

|  | Ex. 1 [ppm]. | Comp. Ex. 1 [ppm] | Comp. Ex. 2 [ppm] | Comp. Ex. 3 [ppm] |
|---|---|---|---|---|
| Ca | 0.17 | 0.17 | 0.5 | 0.5 |
| Fe | 0.05 | 0.05 | 0.5 | 0.5 |
| Cu | 0.05 | 0.05 | 0.2 | 0.2 |
| Zn | 0.05 | 0.05 | 0.2 | 0.2 |
| Cr | 0.05 | 0.05 | 0.2 | 0.2 |
| Ni | 0.05 | 0.05 | 0.2 | 0.2 |
| Al | 0.05 | 0.05 | 0.5 | 0.5 |
| Mg | 0,05 | 0,05 | 0.5 | 0.5 |
| Na | 0.05 | 0.05 | 0.5 | 0.5 |
| K | 0.05 | 0.05 | 0.5 | 0.5 |

Engine test bench

In order to evaluate the influence of different SCR-reducing agents in a realistic and reproducible way, an engine test bench with a (passenger) car diesel engine was used. The engine (type EA189 2.0 TDI of VW AG) was charged with an eddy-current brake. The test-bench setup comprises a freely programmable engine control unit, which enables adapting the engine operating parameters to different operating conditions in order to adjust the exhaust-gas emission of $NO_x$ before the catalyst converter, the exhaust-gas temperature and the exhaust-gas mass flow to a constant and reproducible level.

The parameters to be adapted are the injected fuel amount, the points of injection time and the position of the variable-turbine-geometry (VTG) turbocharger for adapting the boost pressure. All operating points were adjusted without exhaust gas recirculation rate. The engine and operating media were conditioned by means of test bench equipment/infrastructure, i.e., the temperature of cooling water, lubricating oil, fuel, charge air and injection of reducing agent were adjusted targeted and kept constant. A Coriolis scale was used to determine the fuel mass flow. The air mass flow (mf_ABG_B1) is determined by a hot film anemometer. The exhaust gas mass flow was calculated by adding the two values. The motoric measured variables were recorded with a measurement data acquisition system with a recording rate of 1 Hz and averaged for the individual measuring points over the desired period (2 min) in each case.

Exhaust gas after-treatment system

Downstream of the engine is an exhaust gas after-treatment system (AGN) which consists of the following components in the exhaust gas flow direction. Diesel oxidation catalyst (DOC) with integrated $NO_x$ storage catalyst (NSC), reductant fluid injector, mixer plate, diesel particulate filter with integrated SCR catalyst (SDPF). The exhaust gas temperature was determined by type K thermocouple, and the target temperature was recorded at the inlet to the exhaust gas after-treatment system (T_ABG_vDOC). The differential pressure across the diesel particulate filter with integrated SCR catalyst (dp_DPF) was monitored to prevent a change in the flow conditions in the exhaust gas after-treatment system due to loading of the diesel particulate filter with integrated SCR catalyst with carbon black.

Sampling and exhaust gas measuring technology

The exhaust gas composition was determined using a FTIR spectrometer (IAG Versa 06). A sampling system with 2 lines before the diesel particulate filter with integrated SCR catalyst (vKAT) and after the diesel particulate filter with integrated SCR catalyst (nKAT) enabled the comparison of the emissions before and after the SCR system. As the instrument has only one measuring cell, the samples vKAT and nKAT were determined with a time lag. This also allows any influence due to different measuring cells to be excluded. The sample vKAT was taken after the diesel oxidation catalyst with integrated NOx storage catalyst, so that an influence by these can be excluded in the comparison. The concentrations in ppm for the following components were determined with a recording rate of 5 Hz, moving averaged to 1 Hz and thus continuously stored: ammonia ($NH_3$) and nitrogen oxides ($NO_x$).

Experimental procedure

The reducing agent injector was charged with 6 bar reducing agent pressure (p_ADB_vINJ) and variably controlled in frequency and control period in order to set a corresponding mass flow (mf_ADB_B). A comprehensive measurement of the flow at all operating points was performed by weighing before the start of the engine tests. The injector is conditioned to a temperature of 90°C for all tests. In preliminary tests, 4 metering rates for the reducing agent were defined for all tests:

| | |
|---|---|
| 0 g/h | no $NH_3$ slip |
| 86.4 g/h | just no $NH_3$ slip yet |
| 144 g/h | little $NH_3$ slip in the range of from 3 to 5 ppm |
| 170.4 g/h | much $NH_3$ slip in the range of from > 10 ppm |

The exhaust gas temperature before the diesel oxidation catalyst (T_ABG_vDOC) was set at a steady-state of 200°C for all tests at an exhaust gas mass flow rate (mf_ABG_B1) of 192 kg/h, after the engine and the exhaust gas after-treatment system had completed a sufficient warm-up period and thus reached a steady-state operating point. The measurements were always performed chronologically increasing in the metering rate, while the individual operating points were always set to steady-state:

A) Burning off the exhaust gas after-treatment of possible urea deposits and soot loading of the diesel particulate filter with integrated SCR catalyst at 400 to 500°C.

B) Adjusting the engine parameters for steady-state operation, measuring nKAT/vKAT at 1 Hz to assess the emissions and optionally correcting the operating parameters.

C) nKAT: Adjusting the reducing agent injection at the appropriate metering rate, measuring nKAT until a steady-state condition is established for all measured exhaust gas variables. Recording the measured data at 1 Hz was already in progress.

D) nKAT: Averaging the data for 2 min

E) nKAT: Follow-up time with 1 Hz > 5 min; subsequent assessment of steady-state behavior possible.

F) vKAT: Measuring and averaging the data for 2 min

G) vKAT: Follow-up time with 1 Hz > 1 min

H) Changing the operating point and starting from B).

Before the highest metering rate, additional off burning was performed once (cf. A) to exclude the potential influence of possible urea deposits.

Evaluation

The recorded data were synchronized and screened. Subsequently, the average values at the corresponding times were formed from the data of the FTIR spectrometer and, with the addition of some test bench measurement variables, plotted for each measurement point in the course over the respective lead time, measurement time and follow-up time. These individual overviews allowed an evaluation of the measurements with respect to steady-state behavior or outliers.

The results are shown in Table 3

Table 3

|  | NOx [ppm] | NH3 slip [ppm] |
|---|---|---|
| Comp. Ex. 1 | 68.8 | 13.3 |
| Ex. 1 | 47.6 | 15.3 |
| Comp. Ex. 2 | 69.1 | 17.1 |
| Comp. Ex. 3 | 52.3 | 17.4 |

The dosage of the reductant fluid was 171.2 g/h.

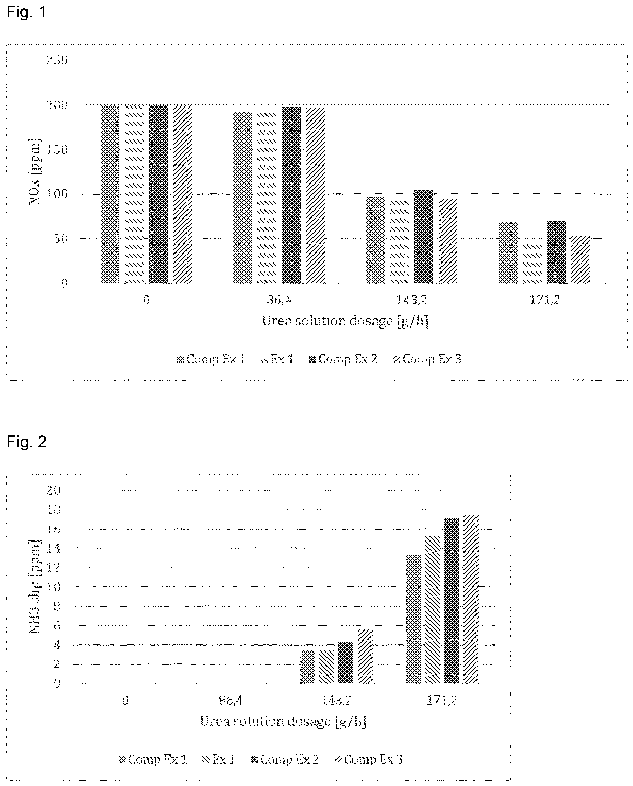

Thus, at a dosage of 171.2 g/h the reductant fluid has a $NO_x$ emission less than 50 ppm (see fig. 1).

Although the $NH_3$ slip of Example 1 is higher than that of Comparative Example 1 under the experimental conditions, the dosage rate of the inventive reductant fluid may be reduced which results in less consumption and less ammonia slip. Thus, a $NH_3$ slip - similar to Comp. Example 1 - can be achieved with less inventive reductant fluid (see fig. 2).

The reductant fluid of Example 1 not only enables the reduction of the dosage of the employed fluid but it enables further reductions of $NO_x$ thresholds defined in e.g. European exhaust emission legislation.

**Claims**

1. A reductant fluid comprising urea, water and at least one non-ionic surfactant, wherein a metal content in total of the reductant fluid is < 3.8 ppm, preferably $\leq$ 3.5 ppm, based on the total weight of the reductant fluid.

2. The reductant fluid according to claim 1, wherein the metal is selected from the group consisting of Al, Ca, Cr, Cu, Fe, K, Mg, Na, Ni, Zn and a mixture of two or more thereof.

3. The reductant fluid according to claim 1 or 2, wherein the metal content of each metal, selected from the group consisting of Al, Ca, K, Mg and Na, is $\leq$ 0.45 ppm, preferably $\leq$ 0.4 ppm, based on the total weight of the reductant fluid.

4. The reductant fluid according to claim 1, 2 or 3, wherein the metal content of each metal, selected from the group consisting of Cr, Cu, Fe and Zn, is $\leq$ 0.18 ppm, preferably $\leq$ 0.15 ppm, based on the total weight of the reductant fluid.

5. The reductant fluid according to any of the preceding claims, wherein the at least one non-ionic surfactant has an HLB value of from 8 to 16.

6. The reductant fluid according to any of the preceding claims, wherein the non-ionic surfactant is a polyalkoxylated alcohol.

7. The reductant fluid according to any of the preceding claims, wherein the at least one non-ionic surfactant is

   (i) a polyalkoxylated alcohol of formula

$$R^1O - (EO)_x - H \qquad (I),$$

   wherein

   $R^1$ is unsubstituted, linear or branched $C_6$-$C_{22}$-alkyl or $C_6$-$C_{22}$-alkenyl,
   x is a real number in the range of $\geq$ 3 to $\leq$ 30, and
   EO is $CH_2$-$CH_2$-O;

   or
   (ii) a polyalkoxylated alcohol of formula

$$R^2\text{-O-}(EO)_y\text{-}(PO)_z\text{- H} \qquad (II),$$

   wherein

R$^2$ is unsubstituted, linear or branched C$_6$-C$_{22}$-alkyl or C$_6$-C$_{22}$-alkenyl,
y is a real number in the range of $\geq 2$ to $\leq 20$,
z is a real number in the range of $\geq 1$ to $\leq 10$,
EO is CH$_2$-CH$_2$-O-,
PO is CH(CH$_3$)-CH$_2$-O- or CH$_2$-CH(CH$_3$)-O-, and

whereby the concatenations of y and z are distributed to form a random polymeric structure.

8. The reductant fluid according to any of the preceding claims, wherein the at least one non-ionic surfactant is a polyalkoxylated alcohol of formula (I),

which is obtainable by ethoxylation of R$^1$-OH with x equivalents of ethylene oxide based on one equivalent R$^1$-OH, wherein
R$^1$ is unsubstituted, linear or branched C$_8$-C$_{18}$-alkyl or unsubstituted, branched C$_{10}$-C$_{15}$-alkyl, and
x is a real number in the range of $\geq 3$ to $\leq 18$, preferably $\geq 5$ to $\leq 15$.

9. The reductant fluid according to any of the preceding claims, wherein the at least one non-ionic surfactant is a polyalkoxylated alcohol of formula (I), wherein

R$^1$ is unsubstituted, linear or branched C$_8$-C$_{18}$-alkyl, and
x is a real number in the range of $\geq 5$ to $\leq 20$.

10. The reductant fluid according to any one of the preceding claims, wherein the reductant fluid comprises 20 to 45 wt% of urea, 55 to 80 wt% of water and 0.01 to 5 wt% of the non-ionic surfactant.

11. The reductant fluid according to any one of the preceding claims, wherein the reductant fluid comprises 22 to 40 wt% of urea, 60 to 78 wt% of water and 0.05 to 3 wt% of the non-ionic surfactant.

12. The use of a reductant fluid, as defined in any one of claims 1 to 11, for after-treatment of an exhaust gas of a diesel engine in a SCR system, wherein the exhaust gas contains nitrogen oxides (NO$_x$).

13. The use of a reductant fluid, as defined in any one of claims 1 to 11, for reducing the content of nitrogen oxides (NO$_x$) in the exhaust gas of a diesel engine in a SCR system.

14. The use according to claim 12 or 13, wherein the temperature of the exhaust gas is $\leq 240$°C, preferably $\leq 230$°C.

15. A SCR system for after-treatment of an exhaust gas of a diesel engine, comprising a source of a reductant fluid, as defined in any one of claims 1 to 11, wherein the exhaust gas contains nitrogen oxides (NO$_x$).

Fig. 1

Fig. 2

# EUROPEAN SEARCH REPORT

Europäisches
Patentamt
European
Patent Office
Office européen
des brevets

**Application Number**

EP 22 18 4912

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2010/015022 A1 (SCHMELZLE PIERRE [FR] ET AL) 21 January 2010 (2010-01-21) * paragraphs [0012], [0017], [0020], [0023] - [0042]; claims 1-6, 10, 17 * | 1-15 | INV. B01D53/94 |
| X | FR 3 064 495 A1 (TOTAL MARKETING SERVICES [FR]) 5 October 2018 (2018-10-05) * page 32, lines 5-10; claims 1-8, 19, 23; table 2 * * page 5, line 26 - page 7, line 23 * | 1-15 | |
| X | US 5 489 419 A (DIEP DANIEL V [US] ET AL) 6 February 1996 (1996-02-06) * column 9, lines 6-19; table * | 1-9,12, 13,15 | |
| X | CN 108 452 654 A (ZHEJIANG ANJI TIANZIHU THERMAL POWER CO LTD) 28 August 2018 (2018-08-28) * example 20 * | 1,6-9 | |
| A | US 2014/369911 A1 (AYYAPPAN PONNAIYAN [US] ET AL) 18 December 2014 (2014-12-18) * paragraphs [0006], [0035]; claims 1, 3, 6, 9 * | 1-15 | TECHNICAL FIELDS SEARCHED (IPC) B01D |
| A | US 8 133 460 B2 (ARVOLA JOUKO [FI]; HAERMAE TIMO [FI] ET AL.) 13 March 2012 (2012-03-13) * Solution 1; table 1 * | 1-15 | |

The present search report has been drawn up for all claims

| Place of search | Date of completion of the search | Examiner |
|---|---|---|
| The Hague | 14 November 2022 | Focante, Francesca |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 22 18 4912

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2022

| Patent document cited in search report | Publication date | Patent family member(s) | | Publication date |
|---|---|---|---|---|
| US 2010015022 A1 | 21-01-2010 | AR | 065441 A1 | 10-06-2009 |
| | | AU | 2008237807 A1 | 23-10-2008 |
| | | BR | PI0806791 A2 | 13-09-2011 |
| | | CA | 2679088 A1 | 23-10-2008 |
| | | CL | 2008000549 A1 | 30-05-2008 |
| | | CN | 101636219 A | 27-01-2010 |
| | | DK | 2129452 T3 | 11-06-2019 |
| | | EP | 2129452 A2 | 09-12-2009 |
| | | ES | 2728802 T3 | 28-10-2019 |
| | | FR | 2912932 A1 | 29-08-2008 |
| | | HU | E043483 T2 | 28-08-2019 |
| | | JP | 5372781 B2 | 18-12-2013 |
| | | JP | 2010519025 A | 03-06-2010 |
| | | KR | 20090127888 A | 14-12-2009 |
| | | MY | 146393 A | 15-08-2012 |
| | | PL | 2129452 T3 | 30-09-2019 |
| | | PT | 2129452 T | 12-06-2019 |
| | | RU | 2009134927 A | 27-03-2011 |
| | | TR | 201908112 T4 | 21-06-2019 |
| | | TW | 200848152 A | 16-12-2008 |
| | | UA | 97138 C2 | 10-01-2012 |
| | | US | 2010015022 A1 | 21-01-2010 |
| | | WO | 2008125745 A2 | 23-10-2008 |
| | | ZA | 200906593 B | 28-07-2010 |
| FR 3064495 A1 | 05-10-2018 | EP | 3600618 A1 | 05-02-2020 |
| | | ES | 2870105 T3 | 26-10-2021 |
| | | FR | 3064495 A1 | 05-10-2018 |
| | | WO | 2018178592 A1 | 04-10-2018 |
| US 5489419 A | 06-02-1996 | KR | 950703488 A | 20-09-1995 |
| | | TW | 278048 B | 11-06-1996 |
| | | US | 5489419 A | 06-02-1996 |
| | | WO | 9408893 A1 | 28-04-1994 |
| CN 108452654 A | 28-08-2018 | NONE | | |
| US 2014369911 A1 | 18-12-2014 | BR | 102014014750 A2 | 09-08-2016 |
| | | CN | 104226108 A | 24-12-2014 |
| | | EP | 2815803 A1 | 24-12-2014 |
| | | US | 2014369911 A1 | 18-12-2014 |
| US 8133460 B2 | 13-03-2012 | CA | 2678079 A1 | 21-08-2008 |
| | | CN | 101622052 A | 06-01-2010 |
| | | EP | 2111285 A1 | 28-10-2009 |
| | | FI | 20070134 A | 16-08-2008 |

EPO FORM P0459

For more details about this annex : see Official Journal of the European Patent Office, No. 12/82

**page 1 of 2**

## ANNEX TO THE EUROPEAN SEARCH REPORT
## ON EUROPEAN PATENT APPLICATION NO.

EP 22 18 4912

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2022

| Patent document cited in search report | Publication date | Patent family member(s) | | Publication date |
|---|---|---|---|---|
| | | JP | 5276022 B2 | 28-08-2013 |
| | | JP | 2010517767 A | 27-05-2010 |
| | | KR | 20090110366 A | 21-10-2009 |
| | | RU | 2009133838 A | 20-03-2011 |
| | | US | 2010084606 A1 | 08-04-2010 |
| | | WO | 2008099063 A1 | 21-08-2008 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010044676 A1
- US 20100015022 A1
- WO 2011046491 A1
- WO 0330733 A1

**Non-patent literature cited in the description**

- Diesel engines - NOx reducing agent AUS 32 - Part 1: Quality requirements. February 2019
- Diesel engines - NOx reducing agent AUS 32 - Part 2: Test methods. February 2019